(19) **Europäisches Patentamt**
**European Patent Office**
**Office européen des brevets**

(11) **EP 1 535 432 B1**

(12) **EUROPEAN PATENT SPECIFICATION**

(45) Date of publication and mention
of the grant of the patent:
**31.10.2007 Bulletin 2007/44**

(51) Int Cl.:
***H04L 12/56*** (2006.01)

(21) Application number: **03792916.3**

(86) International application number:
**PCT/SE2003/001232**

(22) Date of filing: **21.07.2003**

(87) International publication number:
**WO 2004/019569 (04.03.2004 Gazette 2004/10)**

(54) **A METHOD FOR LOAD BALANCING USING SHORT PATH ROUTING**

VERFAHREN ZUM LASTAUSGLEICH DURCH VERWENDUNG VON KURZWEGROUTING

PROCEDE D'EQUILIBRAGE DE CHARGE PAR ROUTAGE PAR CHEMINS COURTS

(84) Designated Contracting States:
**AT BE BG CH CY CZ DE DK EE ES FI FR GB GR HU IE IT LI LU MC NL PT RO SE SI SK TR**
Designated Extension States:
**LT LV**

(30) Priority: **20.08.2002 SE 0202484**

(43) Date of publication of application:
**01.06.2005 Bulletin 2005/22**

(73) Proprietor: **Telia AB (publ)**
**123 86 Farsta (SE)**

(72) Inventors:
• **LINDBERG, Per**
**S-116 43 Stockholm (SE)**
• **KARLSSON, Per-Olof**
**S-128 34 Skarpnäck (SE)**

(74) Representative: **Akerman, Marten Lennart et al**
**Albihns Malmö AB**
**Box 4289**
**203 14 Malmö (SE)**

(56) References cited:
**EP-A1- 0 714 192           WO-A1-02/09307**
**US-A- 5 872 930            US-A1- 2001 043 585**
**US-A1- 2002 163 884**

• **CASELLAS ET AL.: 'Packet Based Load Sharing Schemes in MPLS Networks' UNIVERSAL MULTISERVICE NETWORKS, 2002. ECUMN 02, 2ND EUROPEAN CONF. ON PUBL. April 2002, pages 18 - 28, XP002974388**
• **FORTZ ET AL.: 'Internet Traffic Engineering by Optimizing OSPF weights' INFOCOM 2000. 19TH ANNUAL JOINT CONF. OF THE IEEE COMPUTER AND COMMUNICATIONS SOCIETIES. PROC. vol. 2, March 2000, pages 519 - 528, XP001042765**

**Description**

**FIELD OF THE INVENTION**

The present invention relates in general to improved dynamic load balancing for IP routes traffic and especially for Price-directive load balancing.

**BACKGROUND**

Traditionally IP routes traffic from one router to another on one path only. It is today also possible to have a fixed equal share between multiple shortest paths Equal Cost MultiPath, ECMP.

Highly loaded links give a degraded quality of service due to delay, packet loss and reduced throughput. Thus, there are reasons to divert an adjustable amount of traffic to less loaded parts of the network, which is called load balancing. With a well working load balancing one could achieve:

- Minimisation of traffic disturbances due to high load

- Deferral of link extensions

- Simplified manual management

- Allow alternative network topologies

Load balancing requires an adjustable load sharing. The terminology used here is that load balancing refers to the effect on the network while load sharing defines how an individual router, when forwarding packets, shares the flow to a certain destination between its outgoing links. For a node the load sharing on its outgoing arcs $a$ is for destination $t$ defined by load sharing parameters $\Phi_{a,t}$, the share of flow to destination $t$ to be routed on arc $a$. This means that for each node $n$ the parameters must satisfy

$$\sum_{\substack{\text{arcs } a \\ \text{leaving } n}} \Phi_{a,t} = 1$$

Load balancing in packet networks has been an issue in international research for a long time with very little result on the IP networks of today.

Robert G. Gallager, [GAL77], "A minimum delay routing algorithm using distributed computation", IEEE Trans. on Comm. Vol. Com-25, No 1 Jan. 1977, gave useful relations between basic parameters for distributed load balancing. The target was overall minimisation of delay. Load sharing parameters were successively updated based on marginal delay. The method was for stationary input traffic proven to converge although the guaranteed convergence rate was very slow.

Before Internet, in ARPANET, link weights were updated to reflect delay, thus directing traffic towards minimum delay paths. At high load, this caused severe route instability and the approach had to be revised by A. Khanna and J. Zinky, [KZ89], "The revised ARPANET routing metric", Proc. of ACM SIGCOMM'89, pp 45-56. Austin TX, Sept. 1989. In Internet, the adaptive routing was abandoned.

B. Fortz and M. Thorup, [FT00], "Internet traffic engineering by optimising OSPF weights", Proceedings of INFOCOM'2000, March 2000, studied load balancing by optimising the link weights in Open Shortest Path First OSPF with ECMP. The network studied was the proposed AT&T WorldNet. They succeeded to get close to a target obtained by solving a multi-commodity flow problem with piecewise linear convex link cost functions. They also constructed a network example where ECMP for any link weights gives a poor load balancing.

For a suitable load balancing formulation Yufei Wang, Zheng Wang and Leah Zhang, [WWZ01], "Internet traffic engineering without full mesh overlaying", Proc. of INFOCOM'2001, April 2001, gave a theoretical proof that there exist for the optimal solution link weights (non-integer) such that all the flows are routed on shortest paths. However, they give no clue for how to split the flow in case of several shortest paths.

At the Swedish Institute of Computer Science, have investigated load balancing by a centralised flow optimisation formulation. H. Abrahamsson, B. Ahlgren, J. Alonso, A. Andersson and P. Kreuger, [AAAAK], "A multi path routing algorithm for IP networks based on flow optimisation", also investigated multi path forwarding techniques

An effort to bring load balancing closer to realization was the standardisation work on OMP, Optimised MultiPath, at IETF [Vil99a]. The idea is that links with a changed load will be signalled over the network and that nodes routing flows on paths with this link as a critical segment, will shift flow to or from that path. The amount of flow to shift is determined by an adjustment value that is increased when successive updates are made in the same direction and reduced when they change direction. Link weights are not updated but are used to avoid routing loops, by utilising either links on shortest paths or by forwarding packets to any adjacent node closer to the destination. The work on OMP stagnated and the drafts were not turned into standards.

There is also a version based on MPLS, called MPLS-OMP by C. Villamizar, [Vi199b], "MPLS Optimised Multipath (MPLS-OMP)", Internet Draft, Aug. 18, 1999. It is similar to the OSPF and IS-IS versions of OMP, but there are some MPLS related differences. For example, the ingress router must set up MPLS Label Switched Paths according to the rules of MPLS. The set up of new paths is done after persistent high utilisation, and extra paths are removed when the utilisation is persistent low.

By the architecture of IP, load balancing needs to be implemented in a distributed way. This corresponds to a decomposition of the global optimisation problem = each router has to take decisions based on limited information. Global convergence is possible by signalling crucial data between the routers. If the data signalled is of type link weights or derivatives of link "cost" functions, it is a price-directive decomposition. In this case, it is proper to sum the values along a path. If the data exchanged are link loads as in OMP, it is more a resource-directive decomposition. It is the maximal link load over a path that is critical.

Update interval

Load balancing aims at avoiding overloaded links by diverting traffic to less loaded paths. This requires recurrent automatic updating of the routing based on traffic measurements. There needs to be a strong correlation between the measured traffic and the traffic of the next period. One needs to study traces of the link loads to justify the use of a certain routing update period.

Some aspects that affects the choice of the update period:

- The additional load by the update procedure.
- The time it takes to signal updated data over the network
- The need to get a quick convergence to a new traffic situation
- The traffic disturbance when some flows get a changed routing

C. Villamizar, [Vi199a], "OSPF Optimised Multipath (OSPF-OMP)", Internet Draft, Aug. 18, 1999, describe OSPF-OMP loading information for a link is flooded at intervals dependent the size of the load. The minimal interval is 30 seconds.

S. Vutukury and J.J. Garcia-Luna-Aceves, [VG99], "A simple approximation to minimum delay routing" , ACM SIGCOMM, Sept. 1999, describe some simulated results were presented for an approximation of Gallager's approach with update intervals from 2 to 10 seconds for the load sharing parameters. They also envisaged an update of link weights that should occur at intervals at least a few times longer. These frequent updates may however give high processor load and may give a large random variation in load measurement. An update of load sharing parameters in intervals of 15 minutes should also give an improved throughput, but then one wants a fast convergent algorithm. The observable stability of daily traffic profiles may in fact even motivate a load balancing updated just once a week based on the busy hour traffic, provided that the busy hours are coincident.

Forwarding techniques for load sharing

To achieve load balancing a router must be able to share the traffic to a destination between several outgoing links in adjustable proportions. The forwarding technique should satisfy the requirements:

- Low overhead
- Path integrity for individual flows
- Load sharing in arbitrary proportions
- Precision in load sharing
- Adjustable with minimum path changes for current flows.

In Zhiruo Cao, Zheng Wang, Ellen Zegura, [CWZ00], "Performance of Hashing-Based Schemes for Internet Load Balancing", IEEE INFOCOM 2000, Tel-Aviv March 2000, is evaluated that hashing using a 16-bit Cyclic Redundant Checksum on the 5-tuple of source address, destination address, source port, address port and protocol number gives an excellent precision. To give a load sharing of arbitrary and adjustable proportions the use of table-based hashing is recommended. The hashing produces a number from 1 to $M$. Each value is through a table assigned to one of the links. By having $M$ larger than the number of links, each link can take the traffic of a suitable number of values. A larger $M$ gives a finer granularity.

Influence on network planning

Capacity extension planning, traditionally based on measurements of the individual links, will be affected by load balancing. If long detours are used it may be difficult to find the link with the highest need for extension. More than dimensioning single links one needs to dimension the capacity of cuts in the network, a method earlier used for transport network planning. If the load balancing is based on updated link weights, one should rather extend links with high weights. Generally, one should extend the network in the direction of a target network that has been designed for a forecasted traffic matrix.

Prior art document WO 0209307 describes a method and a device for routing packets in a router to egress ports, the method comprising the steps of: (a) using a common characteristic of each packet, choosing a set of egress ports from a table of sets of ports associated with said characteristic; (b) processing any one or more addresses or labels of each packet using a common function, producing thereby a numerical processing result for each packet processed; and (c) using all or a portion of the numerical processing result to select a single egress port for each packet from among the egress ports of the set chosen in step (a).

US 5,872,930 discloses a method for, in an electronic message system having at least a first site and a second site each site having one or more servers and the servers at the first site being linked with the servers at the second site by a plurality of alternative message routes, transmitting information over said plurality of message routes according to a desired distribution which balances message traffic between the alternative message routes so as to facilitate efficient message distribution notwithstanding an arbitrarily large number of servers at any of the sites.

EP 0714192 discloses a method in a packet switching network for establishing a new connection between nodes and for reserving bandwidth between an origin node and a destination node, with a given requesting priority level, by pre-empting, when insufficient bandwidth is available on a link, existing connections of lower holding priority levels, each node in the network comprising one or more communication adapters for receiving and transmitting data packets, a route controller for allocating, controlling and managing network resources, and a topology database, updated by means of network control messages, for storing the network configuration and traffic characteristics.

US 2001043585 discloses a method for distributing data-traffic load on a communication network, and a communication network for implementing this method. In order to distribute the data traffic load , a data traffic monitoring system ascertains the current loading on all link lines and/or network nodes, and determines distribution information for each network node. Based on the distribution information received, the network node generates an allocation model, which is used to divide the address information of data packets into separate address classes, each of which is assigned to one of a number of alternative routes leading to a particular destination network node.

As prior art documents relevant to the present invention can also be mentioned Casellas et al.: "Packet Based Load Sharing Schemes in MPLS Networks" UNIVERSAL MULTISERVICE NETWORKS, 2002- ecumn 02, 2nd EUROPEAN CONF. ON PUBL. April 2002, pages 18 - 28, XP002974388 and FORTZ ET AL.: "Internet Traffic Engineering by Optimizing OSPF weights" INFOCOM 2000. 19TH ANNUAL JOINT CONF. OF THE IEEE COMPUTER AND COMMUNICATIONS SOCIETIES. PROC. vol. 2, March 2000, pages 519-528, XP001042765.

**SUMMARY OF THE INVENTION**

The present invention relates to improved dynamic load balancing for IP routes traffic especially for Price-directive load balancing.

The method achieves a flexible and fine-tuned load balancing in IP networks through dynamic updating of link weights.

A router should use a method to determine the load sharing on its outgoing links for traffic to each destination. It is based on link weights and the lengths of the shortest paths as calculated by ordinary IP routing protocols. To decide the load sharing on the outgoing links for traffic to a certain destination $t$, the router $n$ calculates an expression depending on the link weight $w_{n.m}$ of outgoing link and the difference of the distance from $n$ to $t$ and that from the adjacent router $m$ to $t$. The expression also depends on a parameter $\alpha$ between 0 and 1 such that a lower value will allow more alternative paths. The load sharing applied by router $n$ is then to share the traffic for destination $t$ on the outgoing links in proportion to the calculated values.

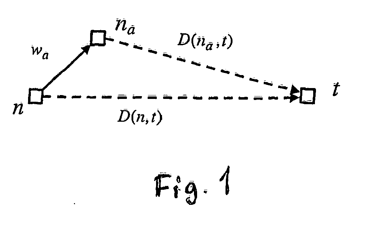

Dynamic load balancing is based on dynamic updates of the routing metric where one can use Price=directive load balancing, Short Path Routing. The main problem with load balancing by shortest path routing is that the link loads do not vary continuously with $w$, which causes route flapping. To make the routing depend continuously on the metric $w$, the concept of short path routing is proposed. With this concept some flow is also allowed on paths that may be longer than the shortest path. By letting the amount of flow routed on a path depend on the length, load balancing can be achieved by the link weights $\boldsymbol{w}$ only. A global parameter $\alpha$ is needed to control how much longer paths that would be allowed, see figure 1. Notations:

$$w = (w_a) \quad \text{link weights} \quad w_a > 0$$

$0 < \alpha < 1$ detour parameter allowing path lengths up to $1/\alpha$ of the shortest

$D_w(n,t)$ the length of the shortest path from node $n$ to $t$ (with respect to link metric $\boldsymbol{w}$)

Definition of Short Path Routing:

$$\left( \frac{D(n,t) - \bar{D}(m,t)}{w_{n,m}} - \alpha \right)^+$$

The flow leaving a node $n$ with destination $t$ is split on the outgoing arcs $( n_{\bar{a}} = n )$ in proportion to a

Advantages

IP load balancing has the potential to improve the network efficiency for a large range of different update intervals There are forwarding techniques to provide a flexible and precise load sharing:

❖ The proposal "Short path routing" might improve convergence for load balancing methods based on dynamic link weights

**BRIEF DESCRIPTION OF THE DRAWINGS**

Figure 1 shows a network with link weights.

**DETAILED DESCRIPTION**

Formulation of load balancing as flow optimisation

A finite network $(N,A)$ of nodes $n\varepsilon N$ and directed arcs $a\varepsilon A$. Assume that there always is an arc of opposite direction, which is denoted $\overleftarrow{a}$. The network is defined by

$n_a$  the terminal node of link $a$
$n\overleftarrow{a}$  the initial node of link a
$c_a$  the capacity of link $a$

Another way to describe the network structure is the $|N| \times |A|$ node-arc incidence matrix

$$A = (A_{n,a}) \quad A_{n,\bar{a}} = \begin{cases} -1 & \text{if} & n = n_{\bar{a}} \\ 1 & \text{if} & n = n_a \\ 0 & & \text{otherwise} \end{cases}$$

There is a demand for flow in the network that constitutes a multi-commodity flow demand. With $k$ denoting a commodity, the demand can be expressed in a node-demand incidence matrix $\mathbf{B}=(B_{n,k})$ where $B_{n,k}$ denotes the flow demand for commodity $k$, negative at an ingress node $n$ and positive at an egress node. Often it is practical to let the flow of commodity $k$ represent all traffic with a certain destination, i.e. traffic from many ingress nodes to one egress node. When regarding intra-domain routing and the destination is another domain to which there are more than one link, that domain may be represented by one egress node in the model. Then the destination node $t$ is used for identifying the commodity $k$. The routing is represented by a flow matrix $X = (X_{a,k})$ where $X_{a,k} \geq 0$.

The reason for load balancing is that high offered loads on links cause traffic disturbances. This disturbance is expressed as a cost for each arc a cost function $f_a$ on the total flow

$$y_a = \sum_k X_{a,k}$$

The link load is defined by $y_a/c_a$, .i.e. the flow normalized by the capacity.

Disregarding loss in the network the load balancing problem can be formulated as a cost minimization multi-commodity flow problem:

$$\textbf{LBP:} \ \text{Minimize} \ \ F(\mathbf{X}) = \sum_a f_a\left(\sum_k X_{a,k}\right) \tag{1}$$

when $\mathbf{A \cdot X = B}$
$\mathbf{X} \geq \mathbf{0}$

The cost functions $f_a$ should obviously be increasing. The **LBP** formulation is equivalent to the one in [FT00]. It does not include the formulation of [WWZ01] where the target was to minimize the maximal link load. That result could be achieved by choosing "very convex" cost functions, e.g. $f_a(y_a)=c_a(y_a/c_a)^p$ for a large $p$. The formulation here is much more flexible and can be modelled to represent the actual traffic performance dependant on the load. It can expected that the traffic performance is insensitive to the load when the load is low enough. For this reason an plausible type of cost function is

$$f_a(y_a) = g_a y_a + h_a y_a^p \tag{2}$$

for some coefficients $g_a$ and $h_a$. Cost functions of this type have been used for studying vehicle traffic on road networks.

In many papers the load balancing problem has been presented as minimizing the overall delay. That may have been the most important aspect in early networks with high queuing delay at low speed links. Today loss and throughput are generally more important. The behaviour of these parameters is complex and analytically derived expression for the traffic disturbance function $f_a$ cannot be anticipated.

Efficient routing

The term *inefficient* is proposed for routing $\mathbf{X}$ if there is another routing with lower load on some link without having higher load any other link, i.e. a routing $\mathbf{X'}$ satisfying the same demand, $\mathbf{A \cdot X = A \cdot X'}$, and with

$$\sum_k X'_{a,k} \leq \sum_k X_{a,k} \text{ for all a and with}$$

$$\sum_k X'_{a,k} < \sum_k X_{a,k} \text{ for at least one a}$$

A routing $\mathbf{X}$ that is not inefficient is said to be *efficient*. Note that Wang [WWZ01] used the term *loopy* routing instead of *inefficient* routing.

If the cost functions $f_a$ are *strictly* increasing, then any (optimal) solution to LBP must be an efficient routing.

If the cost functions $f_a$ are strictly increasing and $\mathbf{X}$ is an (optimal) solution to LBP, then there exists an arc metric $w=(w_a)$ with $w>0$ so that the flow of each commodity is routed on shortest paths with respect to $\mathbf{w}$. It is proven in Wang [WWZ01] that any efficient routing has this property. This is a strong motivation for the use of metrics for network routing. One should not think that this means that the optimal solution will obtain by just routing the flow on the shortest paths. There may be more than one shortest path between a source and a sink. For the load-balancing problem it is normal that the cost functions $f_a$ are convex. At least some equal shortest paths should then expected. To obtain the optimal solution one then has to split the flow in the correct way on the equal shortest paths. It is only in special cases correct to split the flow in equal parts, which is the approach used by Equal Cost

To express the optimal solution for MultiPath the load balancing problem by the flow matrix **X** is not suitable for a distributed implementation that should be resilient to traffic variation. It is preferable to use load sharing parameters

$\Phi_{a,t}$ the proportion of flow at node $n_{\vec{a}}$ to destination $t$ that is to be routed on arc $a$

If $a0$ is an arc going out from node $n$, it can be calculate $\Phi$ from **X** by

$$\Phi_{a0,t} = X_{a0,t} \Big/ \sum_{\substack{\vec{a} \\ n_{\vec{a}} = n}} \bar{X}_{\vec{a},t}$$

Inversely, from the load sharing parameters $\Phi$ and the demand **B** the flow **X** can be determined by a linear equation system, see [Ga177]. Also the individual flows from each ingress to each egress are easily obtained.

Price-directive load balancing (Short Path Routing) is to make the network flow change continuously with the link weights.

The ARPANET experience shows the risk of route instability for the price-directive load balancing approach with updated link weights. A basic problem is that the amount of traffic that will be redirected when updating link weights is unpredictable. In fact, the flows are (also with ECMP) discontinuous functions of the link weights. To overcome the drawbacks of ARPANET the invention suggest the "Short path routing". For a fixed parameter $\alpha$, $0 \leq \alpha < 1$ and link weights $w_a$ the load sharing for a destination $t$ is for the outgoing arcs $a$ from node $n$ defined to be proportionate to

$$\max\left( 0, \frac{D_w(n,t) - D_w(n_a,t) - \alpha \cdot w_{\bar{a}}}{w_a} \right) \tag{3}$$

where

$D_w(n,t)$ denotes the distance for metric $w$ from node $n$ to destination t
$n_a$ is the end node of arc $a$

The invention has the following properties:

- For $\alpha > 0$, all the paths used have lengths less than $1/\alpha$ times the shortest.
- The loads change continuously with changes in link weights.
- With $\alpha$ close enough to 1, one obtains routings equal to the shortest path routing with ECMP (for any integer weights of bounded size).

As the method is suggested to give a smoother convergence, it is expected that $\alpha$ should not be selected too close to 1. To facilitate small relative changes the link weights need to be rather large from start, e.g. $\geq 100$.

The Short Path Routing never creates any cyclic routing, flow that has left a node $n$ never returns to it.

Proof:

To route from node $n$ to node $m$ and $D_w(n,t) > D_w(m,t)$ must be satisfied.

The flow from $n$ to $t$ will use no path longer than $D_w(n,t)/\alpha$ To use an arc $a1$ from $n$ $D_w(n,t) > \alpha \cdot w_{a1} + D_w(n_{a1},t)$ must hold. The corresponding relation holds for the outgoing arcs from the node $n_{a1}$. Thus, if $a1$, $a2$, ... $aN$ is a path carrying flow from $n$ to $t$ the following relation must be valid

$$D_w(n,t) > \alpha \cdot w_{\bar{a}1} + \alpha \cdot w_{a2} + \ldots + \alpha \cdot w_{aN}$$

If two arcs *a1* and *a2* leaving n both are on shortest paths to *t*, they will get an equal share of the flow. If a is on a shortest path to *t* then

$$D_w(n,t) - D_w(n_a,t) - \alpha \cdot w_a = w_a - \alpha \cdot w_a$$

Thus for both *a1* and *a2* the flow will be proportionate to 1-α. Remark: This is the reason to have $w_a$ in the denominator:

For a fixed **w**, if α is close enough to 1 the Short Path Routing equals OSPF with ECMP (Equal Cost Multipath with an equal split). By choosing a is close enough to 1 each path longer than the shortest path will get a load share proportionate to 0.

with the Short Path Routing the flows on each link varies continuously with 0<α<1 and w>0. The flow to destination t on links outgoing from *n* apparently depends continuously on α, **w** and the incoming flow to *n*. The node *n* most distant to *t* has no incoming flow from other nodes so its outgoing flows will be continuous. Then the flow of the next most distant node must be continuous and so on. Thus for any destination *t* the flow out from any node *n* depends continuously on α and **w**.

A remark on relaxing the best path criteria

Normally IP routes traffic on the shortest paths with respect to the link weights. At load balancing one often wants more paths for routing. In OMP [Vil99a] is proposed to route traffic over all adjacent nodes having shorter distance to the destination. This is called "relaxing the best path criteria". The short path routing suggested here uses a subset of the paths used in OMP, thus guaranteeing a limitation on the maximal path length used.

It may seem that relaxing the best path criteria always adds possible routing paths. An at first astonishing but evident fact is however that in a network with all link weights equal, the relaxation will give no more paths. This should be no problem for load balancing methods that, as Short Path Routing, updates the link weights until a good balance is found. Considering the less restricted choice of paths in OMP the value of α in Short Path Routing should not be so critical. The convergence should be simpler with α=0.5 than with a value closer to 1 that is theoretically more optimal.

An outline of a distributed load balancing algorithm

We consider a global optimisation problem in the LBP formulation (1), although this is not exactly precise as there is loss in the network. The link cost function $f_a(y_a)$ is of the form (2) where $y_a$ represents the offered flow to link *a*. As initial link weights can thus $w_a = g_a$ be used. An optimised load balancing is achieved by having link weights $w_a$ that produces offered flows $y_a$ such that

$$f_a'(y_a) \approx w_a$$

In other cases the link weights should be updated to get closer to $f_a'(y_a)$. The size of the step taken should be adjusted to give the fastest convergence. A step too large may cause oscillations and too small steps give a slow convergence. Probably a larger value of the parameter α will allow a larger step when updating the link weights. The updated link weights are signalled over the network by use of the ordinary routing protocol. For each router to apply the load sharing formula (3) it must know also the shortest path lengths from the adjacent routers to the destination. This can either be signalled to the router or calculated by it.

Load balancing in MPLS

Lengths with respect to a link metric could also be used for load balancing in case MPLS is used. This case is simpler in that respect that there is no risk for a cyclic routing. In line with the ideas on Short Path Routing one could control the load balance with a link metric **w** and the parameter α. Let $L_p$ be the length of MPLS path *p* from *n* to *t* and $L_{min}$ their minimal length. One way of distributing the load on paths is to let the load on path *p* be proportional to

$$\left( \bar{L}_{\min} - \bar{L}_{\bar{p}} \cdot \alpha \right)^+$$

As for Short Path Routing the total flow on each arc will depend continuously of $w$ and $\alpha$ for $w>0$ and $0<\alpha<1$ (also for $\alpha=1$ with an extended definition).

**Claims**

1.  A method for load balancing for IP routes traffic defining how an individual router (n), when forwarding packets, shares the traffic flow to a certain destination (t) between its outgoing links, where crucial data are signalled between the routers, the method comprising the steps:

    - expressing a cost for each outgoing link;
    - calculating an expression depending on a link weight ($w_a$) for each outgoing link based on said cost;
    - sharing the traffic load from router (n) to destination (t) between its outgoing links in proportion to the expressions depending on the link weights;

    **characterised in that** said expressions depending on link weights are load sharing parameters proportionate to the expression $\max \left( 0, \dfrac{D_w(n,t) - D_w(n_a,t) - \alpha \cdot w_a}{w_a} \right)$ wherein $D_w(n,t)$ denotes the distance for metric

    link weight $\boldsymbol{w}$ from the node n to the destination $t$, $\boldsymbol{n_a}$ is the end node of the arc $a$, $0 \le \alpha < 1$, and $\boldsymbol{w_a}$ is the link weight.

2.  A method according to claim 1, **characterised in that** load sharing parameters vary continuously with the link weights so that they can be fine-tuned by small changes in the link weights.

3.  A method according to claim 1 or 2, **characterised in that** the load sharing parameters are determined by link weights and lengths of shortest paths.

4.  A method according to any previous claim, **characterised in that** the load sharing parameters on the outgoing links for traffic to a certain destination $t$, the router $n$ calculates an expression depending on the link weights $\boldsymbol{w_a}$ of outgoing link and the difference of the distance from $n$ to $t$ and that from the adjacent router $\boldsymbol{n_a}$ to $t$.

5.  A method according to any previous claim, **characterised in that** a lower value of the parameter $\alpha$ will allow more alternative paths.

6.  A method according to any previous claim, **characterised in that** the load sharing applied by router $n$ is to share the traffic for destination $t$ on the outgoing links in proportion to the calculated values.

7.  A method according to any previous claim, **characterised in that** the link weights are selected large from start, e.g. $\ge 100$, whereby small relative changes are facilitated.

8.  A method according to any previous claim, **characterised in that** the parameter $\alpha$ is selected to not be too close to 1, whereby a smooth convergence is provided.

9.  A computer program comprising program steps to perform all the steps according to the patent claims 1 - 8.

10. A computer with a readable memory comprising instructions for performing all the steps according to the method in any of above patent claims 1 - 8.

**Patentansprüche**

1. Verfahren zum Lastenausgleich für IP Routenverkehr, der definiert, wie ein individueller Router (n), wenn er Pakete versendet, den Verkehrsfluss zu einem bestimmten Ziel (t) zwischen seinen ausgehenden Verbindungen aufteilt, wobei kritische Daten zwischen den Routern signalisiert werden, wobei das Verfahren die Schritte aufweist:

   - Benennung von Kosten für jede ausgehende Verbindung,
   - Berechnen eines Ausdrucks, der von einem Verbindungsgewicht ($w_a$) abhängt, für jede ausgehende Verbindung basierend auf den Kosten,
   - Aufteilen der Verkehrslast vom Router (n) zum Ziel (t) zwischen seinen ausgehenden Verbindungen in Proportion zu den Ausdrücken abhängig von den Verbindungsgewichtungen, **dadurch gekennzeichnet, dass** die von den Verbindungsgewichten abhängigen Ausdrücke Lastverteilungsparameter sind, die proportional zu dem Ausdruck $\max\left(0, \dfrac{D_w(n,t) - D_w(n_a,t) - \alpha \bullet w_a}{w_a}\right)$ sind, wobei $D_w$(n, t) die Distanz für metrische Verbindungsgewichtung w vom Knoten n zum Ziel bezeichnen, $n_a$ der Endknoten des Bogens a ist, $0 \leq \alpha < 1$, und $w_a$ die Verbindungsgewichtung ist.

2. Verfahren nach Anspruch 1, **dadurch gekennzeichnet, dass** die Lastverteilungsparameter kontinuierlich mit den Verbindungsgewichtungen variieren, so dass sie durch geringe Änderungen in den Verbindungsgewichtungen fein abgestimmt werden können.

3. Verfahren nach Anspruch 1 oder 2, **dadurch gekennzeichnet, dass** die Lastverteilungsparameter durch Verbindungsgewichtungen und Längen der kürzesten Wege bestimmt werden.

4. Verfahren nach einem der vorstehenden Ansprüche, **dadurch gekennzeichnet, dass** die Lastverteilungsparameter auf den ausgehenden Verbindungen für Verkehr zu einem bestimmten Ziel t, dass der Router n abhängig von den Verbindungsgewichten $w_a$ einer ausgehenden Verbindung berechnet und die Differenz des Abstandes von n bis t und die von den angrenzenden Router $n_a$ zu t.

5. Verfahren nach einem der vorstehenden Ansprüche, **dadurch gekennzeichnet, dass** ein geringerer Wert des Parameters $\alpha$ mehr alternative Wege ermöglicht.

6. Verfahren nach einem der vorstehenden Ansprüche, **dadurch gekennzeichnet, dass** die Lastaufteilung, die durch einen Router n verwendet wird, zur Aufteilung des Verkehrs zum Ziel t auf den ausgehenden Verbindungen proportional zu den berechneten Werten ist.

7. Verfahren nach einem der vorstehenden Ansprüche, **dadurch gekennzeichnet, dass** die Verbindungsgewichtungen zu Beginn groß gewählt werden, das heißt $\geq 100$, wodurch kleine relativ Änderungen erleichtert werden.

8. Verfahren nach einem der vorstehenden Ansprüche, **dadurch gekennzeichnet, dass** der Parameter $\alpha$ als nicht zu nahe bei 1 gewählt wird, wodurch eine glatte Konvergenz geschaffen wird.

9. Computerprogramm mit Programmschritten zur Durchführung aller Schritte nach den Patentansprüchen 1 bis 8.

10. Computer mit einem lesbaren Speicher mit Befehlen zur Durchführung aller Schritte entsprechend dem Verfahren nach einem der Patentansprüche 1 bis 8.

**Revendications**

1. Procédé d'équilibrage de charge pour trafic par routes IP définissant comment un routeur individuel (n), lors de la transmission de paquets, partage l'écoulement de trafic vers une certaine destination (t) entre ses liaisons sortantes, où des données capitales sont signalées entre les routeurs, le procédé comprenant les étapes consistant à :

   - exprimer un coût pour chaque liaison sortante ;

- calculer une expression dépendant d'un poids de liaison ($w_a$) pour chaque liaison sortante sur la base dudit coût ;
- partager la charge de trafic provenant du routeur (n) vers la destination (t) entre ses liaisons sortantes proportionnellement aux expressions dépendant des poids de liaison ;

**caractérisé en ce que** lesdites expressions dépendant des poids de liaison sont des paramètres de partage de charge proportionnels à l'expression max $\left(0, \dfrac{D_w(n,t) - D_w(n_a,t) - \alpha \cdot w_a}{w_a}\right)$ où $D_w(n,t)$ indique la distance pour le poids de liaison métrique w depuis le noeud n à la destination t, $n_a$ est le noeud d'extrémité de l'arc a, $0 \le \alpha < 1$, et $w_a$ est le poids de liaison.

2. Procédé selon la revendication 1, **caractérisé en ce que** les paramètres de partage de charge varient en continu avec les poids de liaison de sorte qu'ils puissent être réglés précisément par de petits changements des poids de liaison.

3. Procédé selon la revendication 1 ou 2, **caractérisé en ce que** les paramètres de partage de charge sont déterminés par des poids de liaison et les longueurs des chemins les plus courts.

4. Procédé selon l'une quelconque des revendications précédentes, **caractérisé en ce que** pour les paramètres de partage de charge sur les liaisons sortantes pour le trafic en direction d'une certaine destination t, le routeur n calcule une expression dépendant des poids de liaison $w_a$ de liaison sortante et de la différence de la distance de n à t et celle du routeur adjacent $n_a$ à t.

5. Procédé selon l'une quelconque des revendications précédentes, **caractérisé en ce qu'**une valeur inférieure du paramètre $\alpha$ permettra davantage de chemins alternatifs.

6. Procédé selon l'une quelconque des revendications précédentes, **caractérisé en ce que** le partage de charge appliqué par le routeur n consiste à partager le trafic pour la destination t sur les liaisons sortantes proportionnellement aux valeurs calculées.

7. Procédé selon l'une quelconque des revendications précédentes, **caractérisé en ce que** les poids de liaison sont sélectionnés à niveau important depuis le début, par exemple $\ge 100$, moyennant quoi de petits changements relatifs sont facilités.

8. Procédé selon l'une quelconque des revendications précédentes, **caractérisé en ce que** le paramètre $\alpha$ est sélectionné pour ne pas être trop proche de 1, moyennant quoi une convergence régulière est permise.

9. Programme informatique comprenant des étapes de programme pour effectuer toutes les étapes selon les revendications de brevet 1 à 8.

10. Ordinateur doté d'une mémoire lisible comprenant des instructions pour effectuer toutes les étapes selon le procédé selon l'une quelconque des revendications de brevet 1 à 8 ci-dessus.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0209307 A
- US 5872930 A
- EP 0714192 A
- US 2001043585 A

### Non-patent literature cited in the description

- **ROBERT G. GALLAGER.** A minimum delay routing algorithm using distributed computation. *IEEE Trans. on Comm.,* January 1977, vol. 25 (1
- **A. KHANNA ; J. ZINKY.** The revised ARPANET routing metric. *Proc. of ACM SIGCOMM'89,* September 1989, 45-56
- **B. FORTZ ; M. THORUP.** Internet traffic engineering by optimising OSPF weights. *Proceedings of INFOCOM'2000,* March 2000
- **YUFEI WANG ; ZHENG WANG ; LEAH ZHANG.** Internet traffic engineering without full mesh overlaying. *Proc. of INFOCOM'2001,* April 2001
- **H. ABRAHAMSSON ; B. AHLGREN ; J. ALONSO ; A. ANDERSSON ; P. KREUGER.** *A multi path routing algorithm for IP networks based on flow optimisation*
- **C. VILLAMIZAR.** MPLS Optimised Multipath (MPLS-OMP. *Internet Draft,* 18 August 1999
- **C. VILLAMIZAR.** OSPF Optimised Multipath (OSPF-OMP. *Internet Draft,* 18 August 1999
- **S. VUTUKURY ; J.J. GARCIA-LUNA-ACEVES.** A simple approximation to minimum delay routing. *ACM SIGCOMM,* September 1999
- **ZHIRUO CAO ; ZHENG WANG ; ELLEN ZEGURA.** Performance of Hashing-Based Schemes for Internet Load Balancing. *IEEE INFOCOM,* 2000
- **CASELLAS et al.** Packet Based Load Sharing Schemes in MPLS Networks. *UNIVERSAL MULTI-SERVICE NETWORKS,* April 2002, 18-28
- **FORTZ et al.** Internet Traffic Engineering by Optimizing OSPF weights. *INFOCOM,* 02 March 2000, 519-528